# FASCICULE DE BREVET EUROPEEN

(11) **EP 1 467 188 B1**
(45) Date de publication et mention de la délivrance du brevet: **21.05.2008**
(21) Numéro de dépôt: 04300181.7
(22) Date de dépôt: 02.04.2004
(51) Int. Cl.: G01F 3/08

(54) **Compteur d'eau à chambre de mesure volumétrique**
Wassermesser mit volumetrischer Messkammer
Water meter with volumetric measuring chamber

(30) Priorité: 04.04.2003 FR 0350088
(43) Date de publication de la demande: 13.10.2004
(73) Titulaire: Actaris SAS, 92100 Boulogne (FR)
(72) Inventeur: Cognot, Gilles, 71000 Varennes les Macon (FR)
(74) Mandataire: Lenne, Laurence

(56) Documents cités:
- EP-A- 1 255 095
- EP-A- 1 447 649
- US-A- 3 842 672

## Description

La présente invention concerne un compteur de fluide, en particulier un compteur d'eau à chambre de mesure volumétrique.

Un tel compteur connu comporte un carter ou bâche pourvu d'une conduite d'arrivée et d'une conduite de sortie et dans lequel est insérée une chambre de mesure volumétrique du type à piston oscillant. Cette chambre de mesure est pourvue d'au moins une ouïe d'entrée et d'au moins une ouïe de sortie. Un tel compteur est bien connu de l'homme du métier.

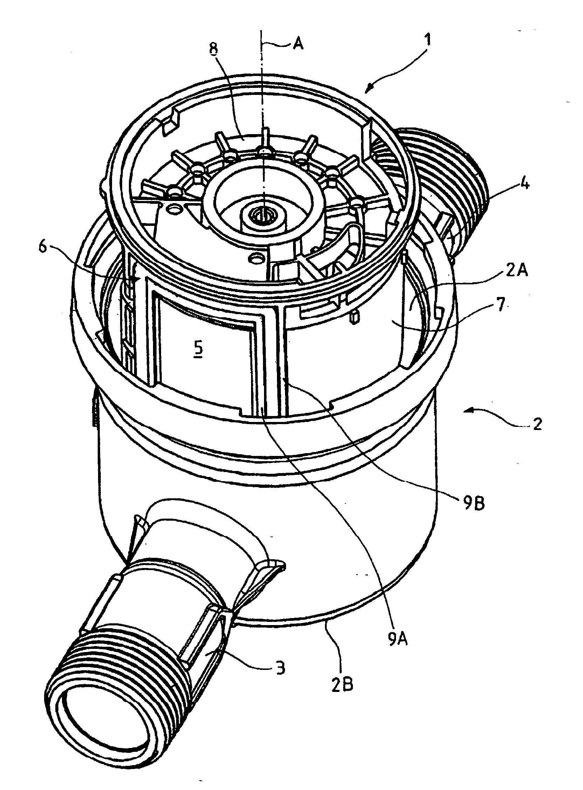

Dans certaines conformations de cette chambre de mesure telles que représenté sur la figure 1, l'ouïe d'entrée ou l'ouïe de sortie 5 est conformée sur la paroi latérale de l'enveloppe de la chambre 1 sur une hauteur déterminée. Cette ouïe doit être connectée de façon étanche à la conduite d'arrivée ou de sortie correspondante 3, 4 et, pour ce faire, un joint 6 est mis en place dans une rainure agencée sur la face externe de l'enveloppe de la chambre autour de l'ouïe. Une fois la chambre de mesure 1 mise en place dans la bâche 2, ce joint 6 est serré dans la fente existant entre chambre de mesure et bâche et assure le passage étanche du fluide entre ouïe et conduite correspondante. Le joint 6 à section constante est de forme correspondante à celle de l'ouïe, généralement rectangulaire.

Le montage est effectué par mise en place manuelle du joint dans sa rainure sur la chambre de mesure 1 puis insertion de la chambre de mesure dans la bâche 2.

Le brevet US3842672 (singer) décrit un tel compteur de fluide volumétrique du type à piston oscillant qui utilise des joints entre la chambre de mesure et la bâche.

De façon générale, dans le cas d'une telle ouïe latérale ou dans le cas d'ouïe disposée dans le couvercle ou dans le fond de la chambre de mesure, cette mise en place manuelle du joint entraîne la fabrication de compteurs défectueux à cause de mauvais montages de ce joint ou même de son oubli lors de l'assemblage.

Plus précisément dans le cas d'ouïe latérale, afin de réaliser l'étanchéité, le joint est à l'état de repos de diamètre supérieur à la largeur de la fente existant entre chambre de mesure et bâche. Il est donc soumis lors de l'insertion de la chambre de mesure à des efforts de direction opposée à la direction d'insertion de la chambre de mesure dans la bâche, également de section circulaire constante, et ceci sur toute la hauteur d'assemblage. Ces efforts relativement importants peuvent avoir pour conséquences de chasser le joint hors de la rainure, le joint se détachant de la chambre de mesure qui risque d'être assemblée à la bâche sans étanchéité rendant le compteur hors usage, de le déformer dans une direction opposée à la direction d'insertion et même de le couper. Ces problèmes sont incompatibles avec un assemblage du compteur en grande série.

L'invention concerne un compteur de fluide en particulier compteur d'eau, comportant, comme représenté sur la figure, une bâche 2 comportant un fond 2B et dans laquelle est insérée par une ouverture opposée au dit fond selon une direction dite d'insertion parallèle à son axe de symétrie une chambre de mesure 1 volumétrique du type à piston oscillant et pourvue d'au moins une ouïe 5 connectée de façon étanche à une conduite 3 de la bâche par l'intermédiaire d'un joint, ce joint étant destiné à être comprimé entre une surface externe de la chambre 1 et une surface interne de la bâche 2 caractérisé en ce que ledit joint est constitué d'un cordon de matière plastique polymérisable à l'état pâteux déposé sur une desdites surfaces.

La conduite 3 est ici une conduite de sortie et la bâche comporte également une conduite d'arrivée 4. Plus précisément, la chambre est insérée par une ouverture 2A opposée au fond 2B de la bâche. La direction d'insertion est parallèle à l'axe de symétrie A de la bâche 2.

L'enveloppe externe 7 et le couvercle 8 de la chambre de mesure forment une ouïe 5 conformée donc sur la paroi latérale de la chambre 1 sur une hauteur déterminée et devant être connectée de façon étanche à la conduite de sortie 3 et, pour ce faire, un joint est mis en place dans une rainure agencée sur la face externe de l'enveloppe 7 de la chambre autour de l'ouïe 5.

Pour résoudre les problèmes évoqués plus haut, l'invention propose que le joint soit constitué d'un cordon de matière plastique polymérisable déposé sur une desdites surfaces et de préférence dans une rainure agencée sur la chambre de mesure. Avantageusement, la matière plastique est du silicone qui peut être monocomposant ou bicomposant.

Grâce à l'invention, le montage devient compatible avec les contraintes d'assemblage en grande série quant à la qualité et la productivité. En particulier, grâce à l'invention, l'opération de pose du cordon de joint est automatisée et systématique contrairement à l'art antérieur où le joint étant mis en place manuellement, il est possible de l'oublier.

Selon un premier mode de réalisation, le cordon de silicone est déposé avant l'insertion de la chambre de mesure dans la bâche.

Ce mode de réalisation du joint a pour avantage d'entraîner lors de la pose du cordon, qui peut très facilement être automatisée, un accrochage adhérent de la matière plastique sur la surface sur laquelle elle est déposée. Cette adhérence est telle qu'elle permet une manipulation de la pièce, ici la chambre de mesure, portant cette surface sans risque de déplacement du cordon.

Surtout, la chambre de mesure peut être insérée dans la bâche comme déjà évoqué plus haut sans aucun risque de chasser le joint hors de la rainure ou de le déformer dans une direction opposée à la direction d'insertion ou de le couper.

L'insertion de la chambre de mesure dans la bâche peut alors être opérée avant ou après polymérisation du silicone.

Le premier cas présente les avantages techniques suivants.

Lors de l'insertion de la chambre de mesure dans la bâche, le cordon de silicone est pâteux avant polymérisation. Il peut être donc inséré entre les surfaces de ces deux pièces sans aucune contrainte de déformation sur celles-ci.

Lors de la polymérisation du cordon de silicone déjà en place entre la chambre de mesure et la bâche, il se crée une adhérence intime de ce cordon de façon identique avec chacune des surfaces de ces pièces en contact avec lui. Cet accrochage est alors équilibré entre la chambre de mesure et la bâche et il n'est créé aucun effort de déformation en particulier préjudiciable sur la chambre de mesure car pouvant entraîner des conséquences sur le déplacement correct du piston oscillant. De plus, cet agencement de joint devient également indémontable sans arrachage du cordon.

Ce procédé de montage permet de plus de laisser la surface interne de la bâche brute, sans usinage de sa matière qui peut être du métal ou de la matière plastique. En effet, pour cet accrochage du silicone il n'est absolument pas nécessaire d'avoir une surface lisse, au contraire. Cet avantage est particulièrement économique par rapport à l'art antérieur.

Selon une variante de ce mode de réalisation, un agent d'expansion peut être ajouté au silicone.

Dans ce cas, il est choisi de telle façon que le cordon s'expanse lors de sa polymérisation, la chambre de mesure étant déjà insérée dans la bâche. Ainsi est supprimé tout risque de déformation du cordon au cours de cette insertion.

Selon un second mode de réalisation, le cordon de silicone est injecté entre les surfaces de la chambre de mesure et de la bâche après l'insertion de la chambre de mesure dans la bâche.

Dans ce cas, la rainure de réception du joint étant conformée de deux nervures 9A, 9B issues de moulage sur l'enveloppe extérieure 7 et le couvercle 8 de la chambre de mesure autour de l'ouïe 5, la nervure extérieure 9B au niveau du couvercle 8 de la chambre de mesure est pourvue d'au moins un orifice d'injection, par lequel est injecté le silicone dans l'espace délimité par cette rainure et la surface de la bâche.

Dans ce qui précède a été décrit le cas d'une ouïe de sortie 5 devant communiquer avec la conduite de sortie 3 de la bâche, mais l'invention s'applique bien sûr également au cas d'une ouïe d'entrée d'un même type devant communiquer avec la conduite d'arrivée 4 de la bâche.

Par ailleurs selon le mode de réalisation décrit, le joint est posé dans une rainure portée par la chambre de mesure, mais cette rainure peut être portée par la bâche selon le même principe.

## Revendications

1. Compteur de fluide en particulier compteur d'eau, comportant une bâche (2) comportant un fond et dans laquelle est insérée par une ouverture opposée au dit fond selon une direction dite d'insertion parallèle à son axe de symétrie une chambre de mesure (1) volumétrique du type à piston oscillant pourvue d'au moins une ouïe (5) connectée de façon étanche à une conduite (3) de la bâche (2) par l'intermédiaire d'un joint, ce joint étant destiné à être comprimé entre une surface externe de la chambre (1) et une surface interne de la bâche (2) **caractérisé en ce que** ledit joint est constitué d'un cordon de matière plastique polymérisable à l'état pâteux déposé sur une desdites surfaces.

2. Compteur selon la revendication 1, **caractérisé en ce que** ladite matière plastique est du silicone.

3. Compteur selon la revendication 2, **caractérisé en ce qu'**un agent d'expansion est ajouté au silicone.

4. Compteur selon l'une des revendications précédentes, **caractérisé en ce que** ledit cordon est déposé dans une rainure agencée sur la chambre de mesure.

5. Procédé de montage d'un compteur selon l'une des revendications précédentes, **caractérisé en ce que** ledit cordon est déposé avant l'insertion de la chambre de mesure dans la bâche.

6. Procédé selon la revendication 5, **caractérisé en ce que** ladite insertion est opérée avant polymérisation de ladite matière plastique.

7. Procédé selon la revendication 6, **caractérisé en ce que** lors de la polymérisation s'opère une étape d'expansion.

8. Procédé de montage d'un compteur selon l'une des revendications 1 à 4, **caractérisé en ce que** ledit cordon est injecté entre lesdites surfaces après l'insertion de la chambre de mesure dans la bâche.

## Claims

1. Fluid meter, in particular a water meter, comprising a tank (2) having a bottom and into which is inserted through an opening opposite said bottom in an insertion direction parallel to its axis of symmetry a volumetric measurement chamber (1) of the oscillating proton type, having at least one orifice (5) connected in a sealed manner to a pipe (3) of the tank (2) via a seal that is adapted to be compressed between an external surface of the chamber (1) and an internal surface of the tank (2), **characterised in that** said seal consists of a bead of polymerizable plastic material deposited onto one of said surfaces in a pasty state.

2. Meter according to claim 1, **characterised in that** said plastic material is silicone.

3. Meter according to claim 2, **characterised in that** an expansion agent is added to the silicone.

4. Meter according to any preceding claim, **characterised in that** said bead is deposited in a groove formed on the measurement chamber.

5. Method of assembling a meter according to any preceding claim, **characterised in that** said bead is deposited before inserting the measurement chamber into the tank.

6. Method according to claim 5, **characterised in that** said measurement chamber is inserted into said tank before polymerization of said plastic material.

7. Method according to claim 6, **characterised in that** an expansion step is executed at the time of polymerization.

8. A method of assembling a meter according to any of claims 1 to 4, **characterised in that** said bead is injected between said surfaces after inserting the measurement chamber into the tank.

## Patentansprüche

1. Fluidzähler, insbesondere Wasserzähler, mit einem Gehäuse (2), das einen Boden aufweist, in dem durch eine dem Boden gegenüberliegende Öffnung in einer so genannten Einführrichtung parallel zu seiner Symmetrieachse eine volumetrische Messkammer (1) der Art mit oszillierendem Kolben eingeführt ist, die mit mindestens einem Durchlass (5) versehen ist, der über eine Dichtung dicht mit einer Leitung (3) des Gehäuses (2) verbunden ist, wobei diese Dichtung zwischen einer Außenfläche der Kammer (1) und einer Innenfläche des Gehäuses (2) komprimiert werden soll, **dadurch gekennzeichnet, dass** die Dichtung aus einer auf eine der Flächen aufgebrachten Raupe aus polymerisierbarem Kunststoff im pastösen Zustand besteht.

2. Zähler nach Anspruch 1, **dadurch gekennzeichnet, dass** der Kunststoff Silikon ist.

3. Zähler nach Anspruch 2, **dadurch gekennzeichnet, dass** dem Silikon ein Treibmittel zugefügt wird.

4. Zähler nach einem der vorhergehenden Ansprüche, **dadurch gekennzeichnet, dass** die Raupe in eine an der Messkammer angeordnete Nut eingebracht wird.

5. Verfahren zur Montage eines Zählers nach einem der vorhergehenden Ansprüche, **dadurch gekennzeichnet, dass** die Raupe vor dem Einführen der Messkammer in das Gehäuse eingebracht wird.

6. Verfahren nach Anspruch 5, **dadurch gekennzeichnet, dass** das Einführen vor der Polymerisierung des Kunststoffs durchgeführt wird.

7. Verfahren nach Anspruch 6, **dadurch gekennzeichnet, dass** während der Polymerisierung ein Expandierschritt erfolgt.

8. Verfahren zur Montage eines Zählers nach einem der Ansprüche 1 bis 4, **dadurch gekennzeichnet, dass** die Raupe nach dem Einführen der Messkammer in das Gehäuse zwischen die Flächen gespritzt wird.
